Europäisches Patentamt

European Patent Office

Office européen des brevets

(19)

(11) Numéro de publication: **0 147 862**
A1

(12) **DEMANDE DE BREVET EUROPEEN**

(21) Numéro de dépôt: 84116408.0

(22) Date de dépôt: 27.12.84

(51) Int. Cl.⁴: **H 04 J 15/00**
G 02 B 6/34, H 04 H 9/00

(30) Priorité: 03.01.84 FR 8400035

(43) Date de publication de la demande:
10.07.85 Bulletin 85/28

(84) Etats contractants désignés:
BE CH DE FR GB IT LI NL

(71) Demandeur: LIGNES TELEGRAPHIQUES ET
TELEPHONIQUES L.T.T.
1, rue Charles Bourseul
F-78702 Conflans-Ste-Honorine(FR)

(72) Inventeur: Gouali, Mohamed
8, rue Jean Dolent
F-75014 Paris(FR)

(72) Inventeur: Folcke, Georges
252, rue du Faubourg St. Martin
F-75010 Paris(FR)

(74) Mandataire: Weinmiller, Jürgen et al,
Zeppelinstrasse 63
D-8000 München 80(DE)

(54) Multiplexeur-demultiplexeur optique de longueurs d'onde utilisant des fibres optiques.

(57) L'invention concerne un multiplexeur-démultiplexeur optique de longueurs d'onde utilisant des fibres optiques.

Pour une liaison bidirectionnelle à trois canaux dont deux d'aller et un de retour, le multiplexeur-démultiplexeur comporte une fibre de liaison (30) biseautée, munie d'un filtre interférentiel (25) et couplée optiquement à trois fibres intermédiaires (13, 14, 15). Une première fibre intermédiaire (13) est biseautée et munie d'un filtre interférentiel (20) et présente un axe optique coupant celui de la fibre de liaison sous un angle donné (θ), tandis qu'une seconde fibre intermédiaire (14) est couplée à cette fibre biseautée, le filtre (20) assurant le multiplexage-démultiplexage des deux canaux aller. Une troisième fibre intermédiaire (15) est rapportée sur la paroi cylindrique de la fibre de liaison pour recevoir ou transmettre, au moyen du filtre (25), le canal retour.

Application aux systèmes de télécommunication sur fibre optique.

FIG.4

# MULTIPLEXEUR-DEMULTIPLEXEUR OPTIQUE DE LONGUEURS D'ONDE UTILISANT DES FIBRES OPTIQUES

La présente invention concerne un multiplexeur-démultiplexeur optique unidirectionnel ou bidirectionnel d'au moins trois longueurs d'onde par utilisation de fibres optiques.

Dans les systèmes de transmissions optiques, il est nécessaire de multiplexer dans une seule fibre optique principale dite de liaison ou de transmission des signaux de différentes longueurs d'onde modulées chacune par les informations à transmettre, et inversement. De tels systèmes optiques sont dits unidirectionnels ou monodirectionnels lorsque les différentes longueurs d'onde se propagent dans un seul sens de la fibre de liaison, et sont dits bidirectionnels lorsque la fibre de liaison transmet dans un sens différentes longueurs d'onde dites d'aller et dans l'autre sens une ou plusieurs autres longueurs d'onde dites de retour. A l'heure actuelle, les systèmes de liaisons optiques bidirectionnelles sont utilisés dans de nombreux domaines tels que par exemple la télématique, les transmissions téléphoniques ou les réseaux de télédistribution dans lesquels une station centrale communique avec des stations périphériques constituées par des appareils d'émission-réception d'abonnés.

On connaît déjà un multiplexeur-démultiplexeur optique à trois voies ou canaux de transmission de longueurs d'onde utilisant des fibres optiques intermédiaires en combinaison avec une seule fibre de liaison soit unidirectionnelle soit bidirectionnelle à deux voies aller et une voie retour, comme cela est décrit dans la demande de brevet français n° 83 07795 déposée le 10 mai 1983 par la Demanderesse et concernant : "Dispositif de multiplexage et de démultiplexage de longueurs d'onde par fibres optiques". Selon cette demande de brevet, pour une liaison unidirectionnelle à trois canaux, la fibre de liaison est biseautée en toit à chacune de ses extrémités et trois fibres optiques intermédiaires transmettant chacune un signal optique d'une longueur d'onde donnée sont couplées optiquement à chaque extrémité biseautée de la fibre de liaison : le multiplexage de ces longueurs d'onde est réalisé à l'une des extrémités biseautées de fibre par une répartition en longueur d'onde dans la fibre de liaison tandis que leur démultiplexage est effectué à l'autre extrémité biseautée de la fibre par une sélection en longueur d'onde au moyen de filtres interférentiels à multicouches diélectriques déposés sur les fibres intermédiaires. De même, pour une liaison bidirectionnelle à trois canaux dont deux d'aller et un de retour, le multiplexage-démultiplexage des longueurs d'onde est réalisé comme précédemment en utilisant deux fibres optiques intermédiaires couplées à chaque extrémité biseautée en toit de la fibre de liaison, l'une des fibres intermédiaires étant bidirectionnelle et chacune d'elles portant un filtre interférentiel.

Toutefois, un tel dispositif de multiplexage-démultiplexage à trois canaux est d'une réalisation pratique très ardue en ce sens qu'il est technologiquement difficile de biseauter le plus parfaitement possible les extrémités d'une fibre optique sous la forme d'un toit. En conséquence, le coût de fabrication d'un tel dispositif est relativement élevé.

La présente invention a pour but de réaliser de façon simple et peu coûteuse un multiplexeur-démultiplexeur optique essentiellement à trois canaux en couplant d'une manière particulièrement satisfaisante tant du point de vue optique que du point de vue mécanique au moins trois fibres optiques intermédiaires à une même extrémité d'une fibre de liaison. Cette réalisation ne nécessite aucun biseautage compliqué, convient aussi bien pour une liaison unidirectionnelle que bidirectionnelle, et se présente sous une forme compacte, c'est-à-dire à faible encombrement.

Ainsi, pour une liaison unidirectionnelle, l'invention a pour objet un multiplexeur-démultiplexeur d'au moins trois longueurs d'onde comportant une fibre optique de liaison à chacune des extrémités de laquelle sont couplées optiquement au moins trois fibres intermédiaires transmettant chacune un signal optique d'une longueur d'onde donnée. Ce multiplexeur-démultiplexeur est carac-

térisé en ce que chaque extrémité de la fibre de liaison est biseautée sous un angle donné et est couplée à une première fibre intermédiaire également biseautée à l'une de ses extrémités de telle sorte que leurs axes longitudinaux respectifs soient distincts, en ce qu'une seconde fibre intermédiaire est couplée à l'extrémité biseautée de la première fibre intermédiaire, en ce qu'une troisième fibre intermédiaire est rapportée sur la paroi cylindrique de la fibre de liaison par des moyens optiques d'indice de réfraction adapté à celui de chacune de ces deux fibres, et en ce que des filtres interférentiels sont déposés sur les extrémités biseautées de la fibre de liaison et de la première fibre intermédiaire pour réaliser le multiplexage-démultiplexage des longueurs d'onde.

D'une façon analogue, pour une liaison bidirectionnelle à au moins trois canaux dont deux d'aller et un de retour, c'est-à-dire pour une seule fibre de liaison transmettant dans un sens deux longueurs d'onde dites d'aller et dans l'autre sens une longueur d'onde dite de retour, le multiplexeur-démultiplexeur selon l'invention est similaire à celui décrit précédemment, en précisant que les première et seconde fibres intermédiaires transmettent chacune un signal optique de l'une des longueurs d'onde d'aller et que la troisième fibre intermédiaire transmet un signal optique de la longueur d'onde de retour.

Selon une autre caractéristique de l'invention, le couplage optique entre la fibre de liaison et chacune des première et seconde fibres intermédiaires est rendu maximal pour une intersection des axes longitudinaux respectifs de la fibre de liaison et de la première fibre intermédiaire sous un angle donné.

D'autres caractéristiques et avantages de l'invention apparaitront mieux dans la description détaillée qui suit et se réfère aux dessins annexés donnés uniquement à titre d'exemple et dans lesquels :

    - la figure 1 représente un schéma général d'un multiplexage-démultiplexage pour une liaison bidirectionnelle par fibre optique ;

    - les figures 2 et 3 représentent respectivement des vues en coupe longitudinale du multiplexeur et du démultiplexeur associé selon l'invention, pour une liaison unidirectionnelle à trois canaux ; et

- les figures $4$ et $5$ représentent respectivement des vues en coupe longitudinale du multiplexeur et du démultiplexeur associé selon l'invention, pour une liaison bidirectionnelle à trois canaux dont deux d'aller et un de retour.

Sur ces différentes figures, les mêmes références se rapportent aux mêmes éléments qui remplissent les mêmes fonctions.

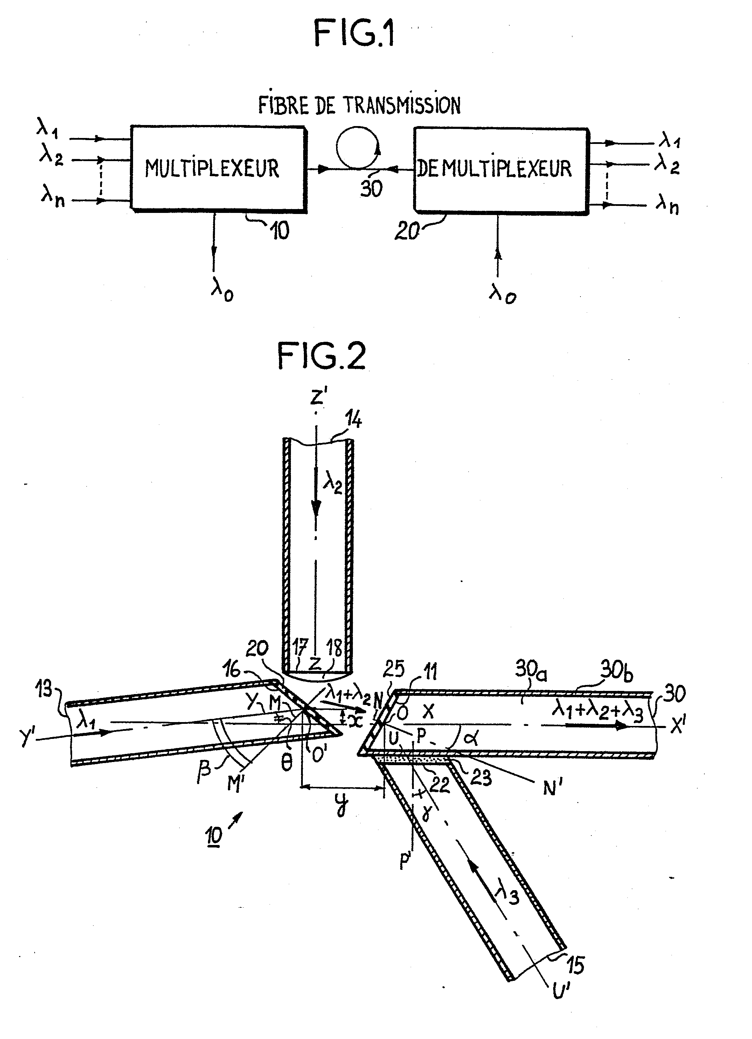

Sur la figure 1, on a représenté en 10 un multiplexeur de $\underline{n}$ longueurs d'onde différentes $\lambda_1$ $\lambda_2$ ... $\lambda_n$ et en 20 le démultiplexeur associé, par exemple pour un système de télédistribution sur une seule fibre optique principale 30 dite de liaison ou de transmission.

La liaison optique est unidirectionnelle ou monodirectionnelle lorsque la fibre optique 30 transmet dans un seul sens, du multiplexeur 10 vers le démultiplexeur 20, les signaux lumineux aux $\underline{n}$ longueurs d'onde $\lambda_1$ $\lambda_2$ ... $\lambda_n$ émises par des diodes photoémettrices, telles que par exemple des diodes laser ou des diodes électroluminescentes (non représentées) et reçues par des diodes photodétectrices, telles que par exemple des photodiodes à avalanche ou des photodiodes du type PIN (non représentées).

Par contre, la liaison est dite bidirectionnelle lorsque la fibre optique 30 transmet dans un sens, comme précédemment, les signaux lumineux aux $\underline{n}$ longueurs d'onde dites d'aller $\lambda_1$ $\lambda_2$ ... $\lambda_n$ et dans l'autre sens une ou plusieurs longueurs d'onde dites de retour dont une seule a été représentée en $\lambda_0$ sur la figure 1, celle-ci étant émise par une diode photoémettrice (non représentée) couplée au démultiplexeur 20 et reçue par une diode photodétectrice (non représentée) couplée au multiplexeur 10.

Ainsi, par exemple pour un système de télédistribution, le dispositif de multiplexage-démultiplexage tel que représenté sur la figure 1 est bidirectionnel à (n+1) canaux ou voies de transmission, c'est-à-dire à $\underline{n}$ canaux aller pour la transmission des signaux vidéo aux longueurs d'onde $\lambda_1$ $\lambda_2$ ... $\lambda_n$ et à un canal retour pour la transmission d'un signal supplémentaire, tel que par exemple un signal de télécommande, à la longueur d'onde $\lambda_0$.

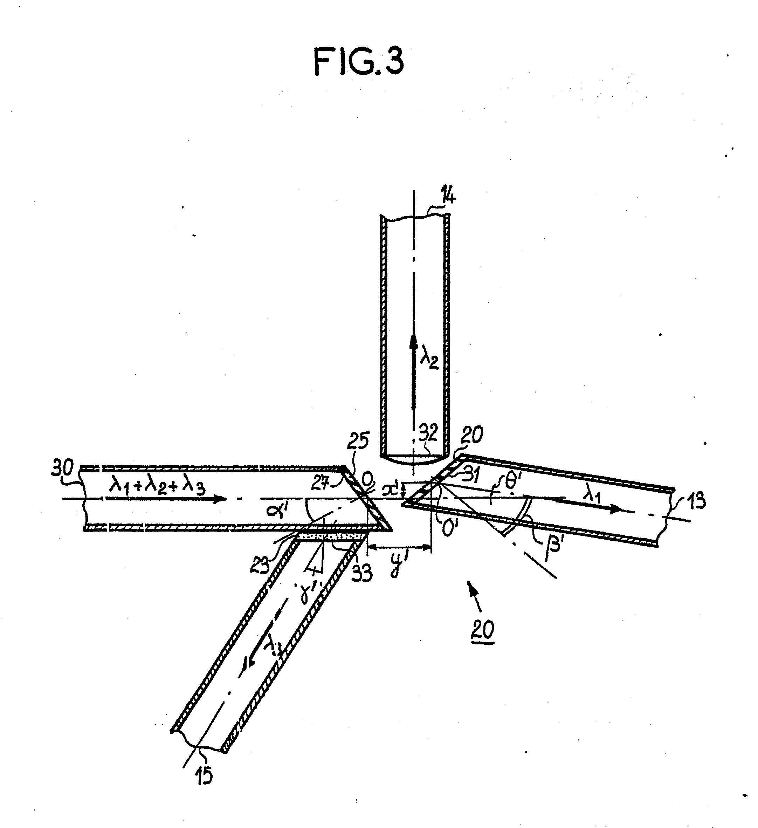

Les figures 2 et 3 représentent respectivement le multiplexeur 10 et le démultiplexeur associé 20 selon l'invention pour une liaison optique unidirectionnelle à trois canaux en utilisant des fibres optiques intermédiaires. Les trois longueurs d'onde différentes utilisées $\lambda_1$, $\lambda_2$ et $\lambda_3$ sont égales respectivement par exemple à 0,78 µm, 0,86 µm et 1,3 µm.

Pour le multiplexeur optique unidirectionnel 10 représenté sur la figure 2a, la fibre de liaison 30 est une fibre de silice du type multimode à gradient d'indice dont le coeur 30a a un diamètre par exemple égal à 50 µm et dont la gaine optique 30b a un diamètre par exemple égal à 125 µm. La fibre optique 30 est donc une fibre 50/125 µm pour laquelle l'ouverture numérique est de l'ordre de 0,19.

Selon un aspect de l'invention, la fibre de liaison 30 présente une face d'entrée 11 qui est biseautée sous un angle $\alpha$ donné formé entre son axe longitudinal XX' et la normale NN' à sa face d'entrée. Cet angle $\alpha$ est choisi de façon à augmenter la valeur de l'angle d'acceptance de la fibre multimode 30 et à réaliser un compromis entre de faibles pertes d'insertion et une diaphonie minimale.

Sur la figure 2, le multiplexeur 10 comporte trois fibres optiques intermédiaires ou de jonction repérées en 13, 14 et 15, d'axes longitudinaux respectifs YY', ZZ' et UU', couplées optiquement à la fibre de liaison 30, et transmettant chacune l'une des trois longueurs d'onde $\lambda_1$, $\lambda_2$ et $\lambda_3$. Ces trois fibres intermédiaires sont par exemple du même type que la fibre de liaison, c'est-à-dire des fibres de silice 50/125 µm à gradient d'indice d'ouverture numérique de l'ordre de 0,19.

La fibre intermédiaire 13 transmettant un signal optique à la longueur d'onde $\lambda_1$ présente une face de sortie 16 dite d'émission de longueur d'onde qui est biseautée sous un angle $\beta$ donné, par exemple égal à 30°, formé entre son axe YY' et la normale MM' à sa face de sortie. Les faces biseautées respectives 11 et 16 des fibres

6

30 et 13 sont couplées l'une à l'autre de telle sorte que leurs axes optiques respectifs XX' et YY' soient distincts, réalisant ainsi une structure à fibres décentrées : les axes optiques XX' et YY' peuvent être soit parallèles non confondus soit sécants.

On notera que les faces biseautées des deux fibres décentrées 30 et 13 représentées sur la figure 2 sont disposées suivant des inclinaisons inverses l'une de l'autre, formant ce qu'on appelle un modèle de prisme dans l'air. Bien entendu, pour cette figure 2 comme pour les autres figures, les faces biseautées de ces deux fibres peuvent être également parallèles, formant ce qu'on appelle un modèle à faces parallèles.

La fibre intermédiaire 14 transmettant un signal optique à la longueur d'onde $\lambda_2$ est couplée optiquement à la fibre de liaison 30 par l'intermédiaire de la fibre 13. Plus précisément, la fibre intermédiaire 14 présente une face de sortie 17 de section droite qui est couplée au maximum à la face biseautée 16 de la fibre intermédiaire 13 à l'aide de moyens de focalisation constitués par exemple par une micro-lentille 18 accolée à la face de sortie de la fibre 14.

Sur la figure 2, la fibre intermédiaire 13 porte sur sa face biseautée 16 des moyens optiques filtrants constitués par exemple par un filtre interférentiel 20 multicouche diélectrique conçu de façon à opérer en transmission pour la longueur d'onde $\lambda_1$ et en réflexion pour la longueur d'onde $\lambda_2$, de sorte que ce filtre produit le multiplexage des deux longueurs d'onde $\lambda_1$ et $\lambda_2$ par répartition en longueur d'onde et génère en sortie un signal optique aux deux longueurs d'onde $\lambda_1 + \lambda_2$ qui est destiné à pénétrer par réfraction dans la fibre de liaison 30 par sa face biseautée 11.

Pour optimiser le couplage entre la fibre de liaison 30 et les deux fibres intermédiaires 13 et 14, d'une part la fibre 13 est positionnée spatialement par rapport à la fibre de liaison 30 de telle sorte que le maximum d'énergie lumineuse à la longueur d'onde $\lambda_1$ soit injectée dans la fibre de liaison, et d'autre part la fibre 14 est disposée par rapport à la fibre 13 de telle sorte que le maximum d'énergie lumineuse à la longueur d'onde $\lambda_2$ une fois réfléchie sur la face biseautée de la fibre 13 soit injecté dans la fibre de liaison. Cette optimisation du couplage est obtenue pour une intersection des axes optiques respectifs XX' et YY' des deux fibres 30 et 13 sous un angle θ, par exemple égal à 30°, pour une certaine distance x selon une direction orthogonale à l'axe de la fibre de liaison entre les centres respectifs O et O' des faces biseautées des fibres 30 et 13, ainsi que pour une certaine distance y selon une direction parallèle à l'axe de la fibre de liaison entre ces mêmes centres O et O'. Ces trois paramètres θ, x et y sont définis expérimentalement en traçant trois courbes de puissance reçue dans la fibre de liaison à une longueur d'onde donnée, et le triplet (θ, x, y) retenu correspond à celui donnant une puissance couplée maximale entre les deux fibres 13 et 30, et donc des pertes d'insertion minimales.

Sur la figure 2 comme sur les autres figures, on a volontairement exagéré le positionnement des différentes fibres, dans un souci de clarté.

Ainsi, le choix de l'angle θ et des côtes x et y permet d'injecter par réfraction le maximum d'énergie lumineuse aux deux longueurs d'onde $\lambda_1 + \lambda_2$ dans la fibre de liaison 30 et de garder guidé à l'intérieur de cette dernière le signal optique à ces deux longueurs d'onde s'y propageant.

On notera que la côte y est également définie pour pouvoir répondre au critère de faible encombrement du multiplexeur, en permettant de disposer la fibre intermédiaire 14 entre la fibre de liaison 30 et la fibre 13 tout en étant couplée au maximum à cette dernière en fonction de son angle de biseautage β, et ceci sans augmenter les pertes.

Comme il apparaît sur la figure 2, la fibre intermédiaire 15 transmettant un signal optique à la longueur d'onde $\lambda_3$ est couplée optiquement à la fibre de liaison 30 en étant rapportée sur la paroi cylindrique de cette dernière. Plus précisément, la fibre intermédiaire 15 présente une face de sortie 22 qui est fixée sur la paroi latérale de la fibre de liaison par l'intermédiaire de moyens optiques adaptateurs d'indice destinés à assurer la continuité optique entre ces deux fibres de façon à permettre au signal optique à la longueur d'onde $\lambda_3$ de pénétrer dans la fibre de liaison. Ces moyens adaptateurs d'indice sont constitués par exemple par une couche de résine époxy 23 ayant un indice adapté à celui de chacune des deux fibres 15 et 30, c'est-à-dire égal ou très voisin de chacun de ceux-ci. Ainsi, à titre illustratif, pour des fibres en silice dont l'indice de réfraction est égal à 1,45, celui de la résine époxy est choisi égal à 1,47.

Selon une première réalisation, on commence par déposer la résine époxy 23 sur la paroi latérale de la fibre de liaison 30, puis on vient rapporter sur celle-ci la fibre intermédiaire 15.

Selon une variante préférée, on commence par enduire la face de sortie de la fibre intermédiaire 15 de résine époxy 23, puis on vient rapporter l'ensemble sur la paroi latérale de la fibre de liaison 30.

La fibre intermédiaire 15 est positionnée par rapport à la fibre de liaison 30 de telle sorte que le signal optique à la longueur d'onde $\lambda_3$, après pénétration dans la fibre de liaison, vienne se réfléchir sur la face biseautée 11 de la fibre de liaison et reste guidé à l'intérieur de celle-ci lors de sa propagation. A cet effet, la réflexion de ce signal optique sur la face biseautée de la fibre de liaison est assurée par des moyens optiques filtrants constitués par exemple par un filtre interférentiel 25 multicouche diélectrique déposé sur la face biseautée de la fibre 30. Ce filtre 25 est conçu de façon à opérer en transmission pour les deux longueurs d'onde précédemment multiplexées $\lambda_1$ et $\lambda_2$ et en réflexion pour la longueur d'onde $\lambda_3$, de sorte qu'il produit le multiplexage des trois longueurs d'onde $\lambda_1$, $\lambda_2$ et $\lambda_3$ dans la fibre de liaison 30 par répartition en longueur d'onde. Dès lors, la fibre 30 transmet un signal optique aux trois longueurs d'onde multiplexées $\lambda_1 + \lambda_2 + \lambda_3$.

D'autre part, l'angle de biseautage $\alpha$ de la fibre de liaison 30 est tel que le signal optique à la longueur d'onde $\lambda_3$, après réflexion

sur la face biseautée 11 de la fibre de liaison, reste guidé dans celle-ci. A titre illustratif, un bon rendement du multiplexeur a été obtenu par la Demanderesse pour un angle de biseautage α égal soit à 45° soit à 22°. Dans le cas d'un angle α égal à 45°, la face de sortie 22 de la fibre intermédiaire 15 est une section droite de celle-ci, la fibre 15 étant disposée perpendiculairement à l'axe longitudinal de la fibre de liaison. Par contre, dans le cas d'un angle α différent de 45°, un bon couplage entre la fibre intermédiaire 15 et la fibre de liaison 30 est obtenu en biseautant la face de sortie de la fibre 15 sous un angle γ donné, par exemple égal à 46°, formé entre son axe longitudinal UU' et la normale PP' à sa face de sortie.

A ce multiplexage unidirectionnel des trois longueurs d'onde $\lambda_1$, $\lambda_2$ et $\lambda_3$ correspond un démultiplexage de ces mêmes longueurs d'onde, réalisé au moyen du démultiplexeur associé 20 représenté sur la figure 2b et qui est conçu d'une façon tout à fait semblable au multiplexeur décrit en référence à la figure 2. On ne décrira donc pas en détail la structure de ce démultiplexeur 20 qui correspond en fait au symétrique de celle du multiplexeur décrit précédemment.

Sur cette figure 3, la fibre de liaison 30 présente une face de sortie 27 qui est biseautée sous un angle α' égal ou différent de l'angle α défini côté multiplexage, tandis que les trois fibres intermédiaires 13, 14 et 15 présentent des faces respectives d'entrée destinées à recevoir chacune l'une des trois longueurs d'onde $\lambda_1$, $\lambda_2$ et $\lambda_3$ : la face d'entrée 31 de la fibre intermédiaire 13 est biseautée comme précédemment sous un angle β' égal ou différent de l'angle β défini côté multiplexage, la face d'entrée 32 de la fibre 14 est de section droite et porte une micro-lentille, et la face d'entrée 33 de la fibre 15 est soit de section droite pour un angle de biseautage α' égal à 45° soit biseautée sous un angle γ' égal ou différent de γ défini côté multiplexage pour un angle de biseautage α' différent de 45°.

En ce qui concerne le couplage entre la fibre de liaison 30 et les fibres intermédiaires 13, 14 et 15, celui-ci est réalisé comme précédemment en référence à la figure 2a, selon les paramètres θ', x' et y' égaux ou différents de ceux tels que définis côté multiplexage.

De même, comme précédemment, la face biseautée 27 de la fibre de liaison porte le même filtre interférentiel 25 jouant le rôle de moyen de sélection et qui est conçu pour transmettre les deux longueurs d'onde $\lambda_1$ et $\lambda_2$ et pour réfléchir la longueur d'onde $\lambda_3$. Ainsi, le filtre 25 génère en sortie de la face biseautée de la fibre de liaison 30 le signal optique aux deux longueurs d'onde $\lambda_1 + \lambda_2$, tandis que le signal optique à la longueur d'onde $\lambda_3$ après réflexion par le filtre traverse la paroi latérale de la fibre de liaison 30 et pénètre dans la fibre 15 en traversant la résine époxy 23 d'indice adapté.

On notera que l'angle de biseautage $\alpha'$ de la fibre de liaison 30 est tel que le signal optique à la longueur d'onde $\lambda_3$ une fois réfléchi par le filtre 25 et après réception par la fibre 15 reste guidé dans cette dernière.

Afin d'améliorer le rendement du démultiplexeur, il peut s'avérer utile de déposer un autre filtre interférentiel multicouche diélectrique (non représenté) entre la résine époxy 23 et la face d'entrée de la fibre intermédiaire 15. Ce filtre est conçu de façon à opérer en transmission pour la longueur d'onde $\lambda_3$ et en réflexion pour les deux longueurs d'onde $\lambda_1$ et $\lambda_2$, permettant ainsi d'éviter toute réjection des deux premières voies sur la troisième, et donc de diminuer la diaphonie.

Comme précédemment, la face biseautée 31 de la fibre intermédiaire 13 porte le même filtre interférentiel 20 qui est conçu pour transmettre la longueur d'onde $\lambda_1$ et pour réfléchir la longueur d'onde $\lambda_2$. Ainsi, le filtre 20 reçoit par réfraction le signal optique aux deux longueurs d'onde $\lambda_1 + \lambda_2$ en sortie de la fibre de liaison 30, et après sélection par le filtre 20, le signal optique à la longueur d'onde $\lambda_1$ est reçu par la fibre intermédiaire 13 à l'intérieur de laquelle le signal reste guidé, tandis que le signal optique à la longueur d'onde $\lambda_2$ est reçu par la fibre intermédiaire 14 dans laquelle le signal se propage en y étant guidé.

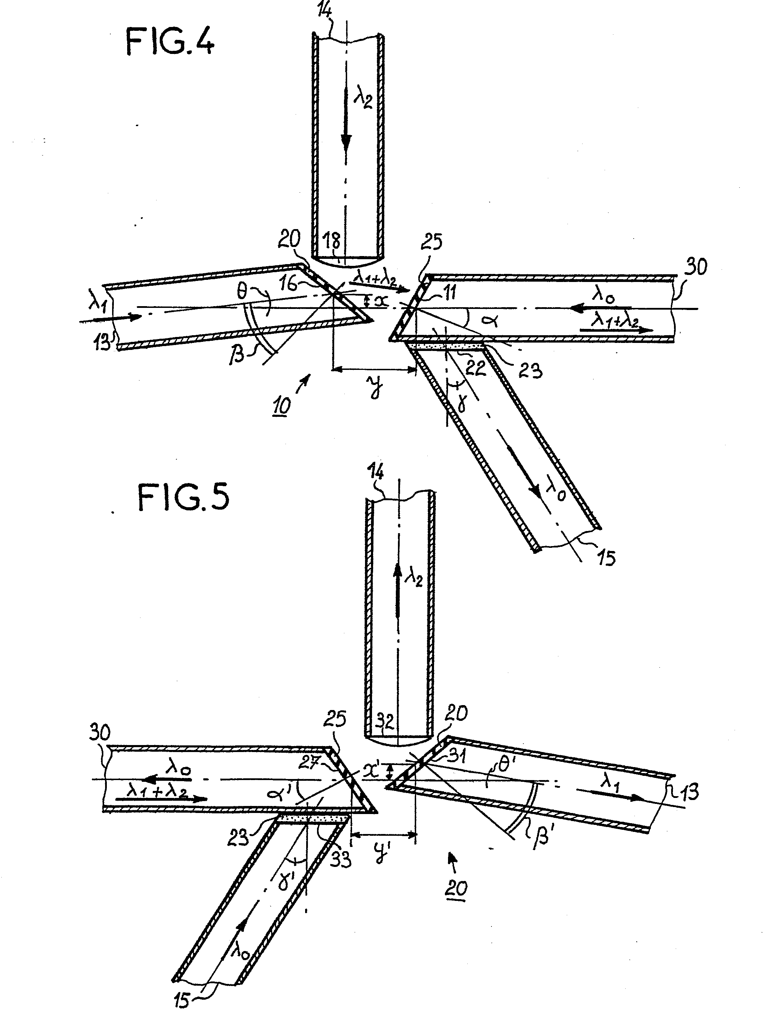

Les figures 4 et 5 représentent respectivement le multiplexeur 10 et le démultiplexeur associé 20, conformes à l'invention, pour une liaison bidirectionnelle à trois voies ou canaux dont deux d'aller et un de retour.

A titre illustratif, les deux canaux aller de cette liaison interactive transmettent les deux longueurs d'onde différentes $\lambda_1$ égale par exemple à 0,86 µm, et $\lambda_2$ égale par exemple à 1,3 µm, tandis que le canal retour transmet la longueur d'onde $\lambda_0$ différente des deux autres et égale par exemple à 0,78 µm.

On ne décrira pas en détail le multiplexeur-démultiplexeur pour cette liaison bidirectionnelle étant donné que celui-ci est réalisé d'une façon analogue au multiplexeur-démultiplexeur unidirectionnel décrit précédemment en référence aux figures 2 et 3.

Pour le multiplexeur optique bidirectionnel 10 représenté sur la figure 4, la face biseautée de la fibre de liaison 30 sert à la fois de face d'entrée pour les deux longueurs d'onde d'aller $\lambda_1$ et $\lambda_2$ et de face de sortie pour la longueur d'onde de retour $\lambda_0$. Le filtre interférentiel 20 porté par la face biseautée de la fibre intermédiaire 13 est conçu comme précédemment et assure le multiplexage des deux longueurs d'onde d'aller $\lambda_1 + \lambda_2$ par répartition en longueur d'onde, tandis que le filtre interférentiel 25 porté par la face biseautée d'entrée-sortie de la fibre de liaison 30 assure d'une part la transmission du signal optique aux deux longueurs d'onde d'aller dans la fibre de liaison et d'autre part la réflexion du signal optique à la longueur d'onde de retour $\lambda_0$. Après réflexion, ce signal optique à la longueur d'onde de retour, $\lambda_0$ sort de la fibre de liaison par sa paroi latérale et est reçu par la fibre intermédiaire 15 pour s'y propager. L'angle de biseautage $\alpha$ de la fibre de liaison 30 est tel que le signal optique à la longueur d'onde de retour $\lambda_0$ une fois réfléchi par le filtre 25 et après réception par la fibre 15 reste guidé dans cette dernière.

De façon similaire, pour le démultiplexeur bidirectionnel 20 représenté sur la figure 5, la face biseautée de la fibre de liaison 30 sert à la fois de face de sortie pour les deux longueurs d'onde

d'aller multiplexées $\lambda_1 + \lambda_2$ et de face d'entrée pour la longueur d'onde de retour $\lambda_0$. Le filtre interférentiel 25 porté par la face biseautée de sortie-entrée de la fibre de liaison 30 est conçu comme précédemment et assure d'une part la transmission des deux longueurs d'onde d'aller $\lambda_1 + \lambda_2$ et d'autre part la réflexion de la longueur d'onde de retour $\lambda_0$ entrant par la paroi latérale de la fibre de liaison 30. L'angle de biseautage $\alpha'$ de la fibre de liaison 30 est tel que le signal optique à la longueur d'onde de retour $\lambda_0$ une fois réfléchi par le filtre 25 reste guidé dans la fibre de liaison.

En sortie du filtre interférentiel 25, le signal optique aux deux longueurs d'onde d'aller $\lambda_1 + \lambda_2$ est reçu par réfraction par le filtre 20 porté par la face biseautée de la fibre intermédiaire 13. Ce filtre 20 est conçu comme précédemment et assure d'une part la transmission du signal optique à la première longueur d'onde d'aller $\lambda_1$ dans la fibre intermédiaire 11 et d'autre part la réflexion du signal optique à la seconde longueur d'onde d'aller $\lambda_2$ qui est reçu par la fibre intermédiaire 14 pour s'y propager en restant guidé. Ainsi, le filtre interférentiel 20 réalise la séparation par sélectivité des deux longueurs d'onde d'aller $\lambda_1$ et $\lambda_2$.

Bien entendu, l'invention n'est nullement limitée au mode de réalisation décrit et représenté et comprend tous les équivalents techniques des moyens décrits ainsi que leurs combinaisons si celles-ci sont effectuées selon l'esprit de l'invention et mises en oeuvre dans le cadre des revendications qui suivent.

# REVENDICATIONS

1. Multiplexeur de longueurs d'onde pour liaison unidirectionnelle, comportant une fibre optique de liaison (30) destinée à transmettre un signal optique d'au moins trois longueurs d'onde multi-plexées ($\lambda_1$, $\lambda_2$, $\lambda_3$) et ayant une face d'entrée et une face de sortie, et au moins trois fibres optiques intermédiaires (13, 14, 15) disposées au niveau de la face d'entrée de la fibre de liaison et ayant chacune une face d'entrée et une face de sortie dite d'émission de longueur d'onde, caractérisé en ce que la face d'entrée de la fibre de liaison (30) et la face de sortie d'une première fibre intermédiaire (13) transmettant un signal optique d'une première longueur d'onde ($\lambda_1$) sont chacune biseautées sous un angle donné et sont couplées l'une à l'autre de telle sorte que les axes longitudinaux respectifs de la fibre de liaison et de la première fibre intermédiaire soient distincts, en ce que la face de sortie d'une seconde fibre intermédiaire (14) transmettant un signal optique d'une seconde longueur d'onde ($\lambda_2$) est couplée à la face biseautée de la première fibre intermédiaire sur laquelle est déposé un premier filtre interférentiel (20) conçu de façon à transmettre le signal optique à la première longueur d'onde et à réfléchir celui à la seconde longueur d'onde, chacun de ces signaux étant destiné à pénétrer dans la fibre de liaison par sa face biseautée, en ce que la face de sortie d'une troisième fibre intermédiaire (15) transmettant un signal optique d'une troisième longueur d'onde ($\lambda_3$) est rapportée sur la paroi cylindrique de la fibre de liaison par des moyens optiques (23) d'indice de réfraction adapté à celui de chacune de ces deux fibres, et en ce qu'un second filtre interférentiel (25) est déposé sur la face biseautée de la fibre de liaison et est conçu de façon à transmettre les signaux optiques respectifs aux première et seconde longueurs d'onde en sortie du premier filtre et à réfléchir celui à la troisième longueur d'onde, ce qui produit le multiplexage des trois longueurs d'onde dans la fibre de liaison.

2. Multiplexeur selon la revendication 1, caractérisé en ce que l'angle de biseautage ($\alpha$) de la face d'entrée de la fibre de liaison (30) est tel que le signal optique à la troisième longueur d'onde ($\lambda_3$) une fois réfléchi par le second filtre (25) reste guidé à l'intérieur de la fibre de liaison.

3. Démultiplexeur de longueurs d'onde pour liaison unidirectionnelle, comportant une fibre optique de liaison (30) transmettant un signal optique d'au moins trois longueurs d'onde multiplexées ($\lambda_1$, $\lambda_2$, $\lambda_3$) et ayant une face d'entrée et une face de sortie, et au moins trois fibres optiques intermédiaires (13, 14, 15) disposées au niveau de la face de sortie de la fibre de liaison et ayant chacune une face d'entrée dite de réception de longueur d'onde et une face de sortie, caractérisé en ce que la face de sortie de la fibre de liaison (30) et la face d'entrée d'une première fibre intermédiaire (13) destinée à transmettre un signal optique d'une première longueur d'onde ($\lambda_1$) sont chacune biseautées sous un angle donné et sont couplées l'une à l'autre de telle sorte que les axes longitudinaux respectifs de la fibre de liaison et de la première fibre intermédiaire soient distincts, en ce que la face d'entrée d'une seconde fibre intermédiaire (14) destinée à transmettre une signal optique d'une seconde longueur d'onde ($\lambda_2$) est couplée à la face biseautée de la première fibre intermédiaire, en ce que la face d'entrée d'une troisième fibre intermédiaire (15) destinée à transmettre un signal optique d'une troisième longueur d'onde ($\lambda_3$) est rapportée sur la paroi cylindrique de la fibre de liaison par des moyens optiques (23) d'indice de réfraction adapté à celui de chacune de ces deux fibres, en ce qu'un premier filtre interférentiel (25) est déposé sur la face biseautée de la fibre de liaison et est conçu de façon à transmettre les signaux optiques aux première et seconde longueurs d'onde en sortie de cette face biseautée et à réfléchir celui à la troisième longueur d'onde pour être reçu par la troisième fibre intermédiaire, et en ce qu'un second filtre interférentiel (20) est déposé sur la face biseautée de la première fibre intermédiaire et est conçu de façon à transmettre le signal optique à la première longueur d'onde en sortie du premier filtre et qui est reçu par la première fibre intermédiaire et à réfléchir celui à la seconde longueur d'onde en sortie du premier filtre pour être reçu par la seconde fibre intermédiaire, ce qui produit le démultiplexage des trois longueurs d'onde.

4. Démultiplexeur selon la revendication 3, caractérisé en ce que l'angle de biseautage ($\alpha'$) de la face de sortie de la fibre de liaison (30) est tel que le signal optique à la troisième longueur d'onde ($\lambda_3$) une fois réfléchi par le premier filtre (25) et reçu par la troisième fibre intermédiaire (15) reste guidé à l'intérieur de cette dernière.

5. Multiplexeur de longueurs d'onde pour liaison bidirectionnelle, comportant une fibre optique de liaison (30) destinée à transmettre dans un sens un signal optique d'au moins deux longueurs d'onde multiplexées ($\lambda_1$, $\lambda_2$) dites d'aller et transmettant dans l'autre sens un signal optique d'au moins une longueur d'onde ($\lambda_0$) dite de retour, la fibre de liaison ayant une face servant à la fois de face d'entrée pour les longueurs d'onde d'aller et de face de sortie pour la longueur d'onde de retour, et au moins trois fibres optiques intermédiaires (13, 14, 15) disposées au niveau de la face d'entrée-sortie de la fibre de liaison et ayant chacune une face d'entrée et une face de sortie, caractérisé en ce que la face d'entrée-sortie de la fibre de liaison (30) et la face de sortie dite d'émission de longueur d'onde d'aller d'une première fibre intermédiaire (13) transmettant un signal optique d'une première longueur d'onde d'aller ($\lambda_1$) sont chacune biseautées sous un angle donné et sont couplées l'une à l'autre de telle sorte que les axes longitudinaux respectifs de la fibre de liaison et de la première fibre intermédiaire soient distincts, en ce que la face de sortie dite d'émission d'une seconde fibre intermédiaire (14) transmettant un signal optique d'une seconde longueur d'onde d'aller ($\lambda_2$) est couplée à la face biseautée de la première fibre intermédiaire sur laquelle est déposé un premier filtre interférentiel (20) conçu de façon à transmettre le signal optique à la première longueur d'onde d'aller et à réfléchir celui à la seconde longueur d'onde d'aller, chacun de ces signaux étant destiné à pénétrer dans la fibre de liaison par sa face biseautée, en ce que la face d'entrée dite de réception de longueur d'onde de retour d'une troisième fibre intermédiaire (15) destinée à transmettre un signal optique à la longueur d'onde de retour $(\lambda_0)$ est rapportée sur la paroi cylindrique de la fibre de liaison par des moyens optiques (23) d'indice de réfraction adapté à celui de chacune de ces deux fibres, et en ce qu'un second filtre interférentiel (25) est déposé sur la face biseautée de la fibre de liaison et est conçu de façon à transmettre dans la fibre de liaison les signaux optiques respectifs aux première et seconde longueurs d'onde d'aller en sortie du premier filtre et à réfléchir celui à la longueur d'onde de retour pour être reçu par la troisième fibre intermédiaire.

6. Multiplexeur selon la revendication 5, caractérisé en ce que l'angle de biseautage (α) de la face d'entrée-sortie de la fibre de liaison (30) est tel que le signal optique à la longueur d'onde de retour $(\lambda_0)$ une fois réfléchi par le second filtre (25) et reçu par la troisième fibre intermédiaire (15) reste guidé à l'intérieur de cette dernière.

7. Multiplexeur selon l'une des revendications 1, 2, 5, 6, caractérisé en ce que les axes longitudinaux respectifs de la fibre de liaison (30) et de la première fibre intermédiaire (13) sont sécants, et en ce que le couplage de la première fibre intermédiaire à la fibre de liaison est défini par l'angle (θ) formé par leurs axes longitudinaux respectifs, par la distance (x) selon une direction orthogonale à l'axe longitudinal de la fibre de liaison entre les centres respectifs de la face biseautée de la fibre de liaison (30) et de celle de la première fibre intermédiaire (13), et par la distance (y) selon une direction parallèle à l'axe de la fibre de liaison entre ces mêmes centres, cette distance (y) étant telle que la seconde fibre intermédiaire (14) est disposée entre la fibre de liaison et la première fibre intermédiaire tout en étant couplée à cette dernière.

8. Démultiplexeur de longueurs d'onde pour liaison bidirectionnelle, comportant une fibre optique de liaison (30) transmettant dans un sens un signal optique d'au moins deux longueurs d'onde multiplexées ($\lambda_1$, $\lambda_2$) dites d'aller et destinée à transmettre dans l'autre sens un signal optique d'au moins une longueur d'onde ($\lambda_0$) dite de retour, la fibre de liaison ayant une face servant à la fois de face de sortie pour les longueurs d'onde d'aller et de face d'entrée pour la longueur d'onde de retour, et au moins trois fibres optiques intermédiaires (13, 14, 15) disposées au niveau de la face de sortie-entrée de la fibre de liaison et ayant chacune une face d'entrée et une face de sortie, caractérisé en ce que la face de sortie-entrée de la fibre de liaison (30) et la face d'entrée dite de réception de longueur d'onde d'aller d'une première fibre intermédiaire (13) destinée à transmettre un signal optique d'une première longueur d'onde d'aller ($\lambda_1$) sont chacune biseautées sous un angle donné et sont couplées l'une à l'autre de telle sorte que les axes longitudinaux respectifs de la fibre de liaison et de la première fibre intermédiaire soient distincts, en ce que la face d'entrée dite de réception d'une seconde fibre intermédiaire (14) destinée à transmettre un signal optique d'une seconde longueur d'onde d'aller ($\lambda_2$) est couplée à la face biseautée de la première fibre intermédiaire, en ce que la face de sortie dite d'émission de longueur d'onde de retour d'une troisième fibre intermédiaire (15) transmettant un signal optique à la longueur d'onde de retour ($\lambda_0$) est rapportée sur la paroi cylindrique de la fibre de liaison par des moyens optiques (23) d'indice de réfraction adapté à celui de chacune de ces deux fibres, en ce qu'un premier filtre interférentiel (25) est déposé sur la face biseautée de la fibre de liaison et est conçu de façon à transmettre les signaux optiques aux première et seconde longueurs d'onde d'aller en sortie de cette face biseautée et à réfléchir dans la fibre de liaison celui à la longueur d'onde de retour, et en ce qu'un second filtre interférentiel (20) est déposé sur la face biseautée de la première fibre intermédiaire et est conçu de façon à transmettre le signal optique à la première longueur d'onde d'aller en sortie du premier filtre et qui est reçu par la première fibre intermédiaire et à réfléchir celui à la seconde longueur d'onde d'aller en sortie du premier filtre pour être reçu par la seconde fibre intermédiaire.

9. Démultiplexeur selon la revendication 8, caractérisé en ce que l'angle de biseautage $(\alpha')$ de la face de sortie-entrée de la fibre de liaison (30) est tel que le signal optique à la longueur d'onde de retour $(\lambda_0)$ une fois réfléchi par le premier filtre (25) reste guidé à l'intérieur de la fibre de liaison.

10. Démultiplexeur selon l'une des revendications 3, 4, 8, 9, caractérisé en ce que les axes longitudinaux respectifs de la fibre de liaison (30) et de la première fibre intermédiaire (13) sont sécants, et en ce que le couplage de la première fibre intermédiaire à la fibre de liaison est défini par l'angle $(\theta')$ formé par leurs axes longitudinaux respectifs, par la distance $(x')$ selon une direction orthogonale à l'axe longitudinal de la fibre de liaison entre les centres respectifs de la face biseautée de la fibre de liaison (30) et de celle de la première fibre intermédiaire (13), et par la distance $(y')$ selon une direction parallèle à l'axe de la fibre de liaison entre ces mêmes centres, cette distance $(y')$ étant telle que la seconde fibre intermédiaire (14) est disposée entre la fibre de liaison et la première fibre intermédiaire tout en étant couplée à cette dernière.

# FIG.1

FIBRE DE TRANSMISSION

$\lambda_1$
$\lambda_2$
$\lambda_n$

MULTIPLEXEUR

30

DEMULTIPLEXEUR

$\lambda_1$
$\lambda_2$
$\lambda_n$

10

20

$\lambda_0$

$\lambda_0$

# FIG.2

0147862

# FIG.3

FIG.4

FIG.5

Office européen des brevets

**RAPPORT DE RECHERCHE EUROPEENNE**

**0147862**
Numéro de la demande

EP 84 11 6408

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | OPTICS LETTERS, vol. 5, no. 7, juillet 1980, pages 321-322, Optical Society of America, New York, US; E. MIYAUCHI et al.: "Compact wavelength multiplexer using optical-fiber pieces * Page 321, colonne de gauche, lignes 1-28 * | 1,3 | H 04 J 15/00<br>G 02 B 6/34<br>H 04 B 9/00 |
| A | CONFERENCE EUROPEENNE SUR LES COMMUNICATIONS OPTIQUES, 21-24 septembre 1982, pages 305-314, Cannes, FR; G. WINZER: "Multiplexage de longueurs d'ondes - Situation et tendances" * Page 309, colonne de droite, lignes 5-12 * | 1,3,5, 8 | |
| A | APPLIED OPTICS, vol. 20, no. 18, 15 septembre 1981, pages 3128-3135, New York, US; G. WINZER et al.: "Single-mode and multimode all-fiber directional couplers for WDM * Page 3129, colonne de gauche, ligne 7 - colonne de droite, ligne 45 * | 1,3 | DOMAINES TECHNIQUES RECHERCHES (Int. Cl.4)<br><br>H 04 J<br>H 04 B<br>G 02 B |
| A | FR-A-2 334 967 (LAB. ELECTRONIQUE) * Page 12, ligne 27 - page 13, ligne 2; figure 6 * | 1,3 | |

Le présent rapport de recherche a été établi pour toutes les revendications

| Lieu de la recherche | Date d'achèvement de la recherche | Examinateur |
|---|---|---|
| LA HAYE | 01-04-1985 | VANDEVENNE M.J. |